# EUROPEAN PATENT APPLICATION

(11) **EP 4 716 186 A1**
(43) Date of publication of application: **25.03.2026**
(21) Application number: 24830431.3
(22) Date of filing: 05.06.2024
(51) Int. Cl.: H04L 67/06, H04N 7/15

(54) **DATA TRANSMISSION METHOD AND APPARATUS**

(30) Priority: 29.06.2023 CN 202310786174; 18.09.2023 CN 202311203704
(71) Applicant: Huawei Cloud Computing Technologies Co., Ltd., Guiyang, Guizhou, 550025 (CN)
(72) Inventor: LIAO, Tao, Guiyang, Guizhou 550025 (CN)
(74) Representative: Gill Jennings & Every LLP
(86) International application number: PCT/CN2024/097443
(87) International publication number: WO 2025/001784

(57) **Abstract**

A data transmission method and apparatus are provided, to flexibly share a meeting file in a meeting. A media service apparatus determines first media data displayed on a screen of a first terminal, where the first media data includes text content in a first language. If a second terminal selects to use a second language, the media service apparatus determines second media data corresponding to the first media data, where the second media data includes text content in the second language, and the first terminal and the second terminal access a same meeting. The media service apparatus controls screen display content of the second terminal based on the second media data. When the first terminal initiates data sharing, if languages used by the second terminal and the first terminal are different, media data in the first language displayed on the screen of the first terminal may be converted into media data in the second language, and the media data in the second language is displayed on the second terminal, to implement flexible transmission of the media data in a video meeting scenario.

## Description

### CROSS-REFERENCE TO RELATED APPLICATIONS

This application claims priority to Chinese Patent Application No. 202310786174.4, filed with the China National Intellectual Property Administration on June 29, 2023 and entitled "MULTI-CHANNEL VIDEO MEETING SHARING METHOD AND APPARATUS", which is incorporated herein by reference in its entirety, and this application claims priority to Chinese Patent Application No. 202311203704.4, filed with the China National Intellectual Property Administration on September 18, 2023 and entitled "DATA TRANSMISSION METHOD AND APPARATUS", which is incorporated herein by reference in its entirety.

### TECHNICAL FIELD

This application relates to the field of communication technologies, and in particular, to a data transmission method and apparatus.

### BACKGROUND

In a video meeting scenario, a plurality of terminals may access a same meeting via a meeting server. In a video meeting, a meeting file may be shared by a target terminal in the plurality of terminals.

When the meeting file used in the meeting is displayed on the target terminal, a user may operate the target terminal to perform screen sharing, to implement sharing of the meeting file displayed on a screen of the target terminal. For example, the target terminal may send display content on the screen to the meeting server, and the meeting server sends the display content on the screen of the target terminal to another terminal in the meeting. In this meeting file sharing manner, content displayed on screens of the plurality of terminals in the meeting is completely the same. When a language used by a participant in the meeting is different from a language in the shared meeting file, the participant cannot understand content in the shared meeting file (for example, when the meeting file shared by the target terminal is a Chinese file, if the participant is an English user, the participant cannot understand the content in the Chinese file). Therefore, the current meeting file sharing manner is not flexible enough.

### SUMMARY

This application provides a data transmission method and apparatus, to flexibly share a meeting file in a meeting.

According to a first aspect, an embodiment of this application provides a data transmission method. The method may be performed by a media service apparatus. The media service apparatus determines first media data displayed on a screen of a first terminal, where the first media data includes text content in a first language. If a second terminal selects to use a second language, the media service apparatus generates second media data corresponding to the first media data, where the second media data includes text content in the second language, and the first terminal and the second terminal access a same meeting. The media service apparatus may control screen display content of the second terminal based on the second media data.

In the foregoing manner, in this embodiment of this application, when the first terminal initiates data sharing and a language used by the second terminal is different from that used by the first terminal, for example, the first terminal uses the first language, and the second terminal uses the second language, the media service apparatus may generate, based on the first media data (including text data in the first language) displayed on the screen of the first terminal, the second media data (including text data in the second language) corresponding to the first media data, and the second media data may be displayed on a screen of the second terminal. In this way, a user of the second terminal may view, in a meeting, media data suitable for a language habit of the user, to implement flexible transmission of the media data in a video meeting scenario, further improving user experience.

In a possible implementation, the first media data is a first video frame in a target video obtained by recording the screen of the first terminal, and the second media data is a second video frame.

In the foregoing manner, data synchronization between the first terminal and the second terminal is implemented in a manner of performing screen recording on the first terminal.

In a possible implementation, the media service apparatus receives the target video sent by the first terminal, where the target video includes a plurality of video frames. The media service apparatus determines the first video frame from the target video, where the first video frame is a video frame that is in the target video and whose display content is changed compared with that of a previous frame.

In the foregoing manner, the media service apparatus uses, as the first video frame, the video frame that is in the target video and whose display content is changed compared with that of the previous frame, so that an amount of data synchronized to the second terminal can be reduced.

In a possible implementation, the media service apparatus translates text content in the first video frame, to obtain the second video frame corresponding to the first video frame.

In the foregoing manner, the media service apparatus translates the text content in the first video frame into the text content in the second language, so that the second video frame synchronized to the second terminal includes the text content in the second language. This can facilitate the user of the second terminal to view media data suitable for a language habit of the user, thereby improving user experience.

In a possible implementation, the first media data is text data of a first online document, the second media data is text data of a second online document, and the text data of the first online document and the text data of the second online document represent a same meaning.

In the foregoing manner, the media service apparatus provides a solution of implementing synchronization between display content of the first terminal and that of the second terminal by using an online document.

In a possible implementation, the media service apparatus determines the text data of the second online document based on address information of the second online document and document positioning information, where the document positioning information is determined based on the text data of the first online document currently displayed on the screen of the first terminal.

In the foregoing manner, the media service apparatus determines the second media data based on the address information of the second online document and the document positioning information, so that synchronization between display content of the first terminal and that of the second terminal can be ensured.

In a possible implementation, the document positioning information is first display location information of the first online document, where the first display location information represents a page number and/or a paragraph, in the first online document, of text data displayed on the screen of the first terminal.

In a possible implementation, the document positioning information is second display location information of the second online document, where the second display location information represents a page number and/or a paragraph, in the second online document, of a text displayed on the screen of the second terminal, the second display location information is determined based on the first display location information of the first online document, and the first display location information represents a page number and/or a paragraph, in the first online document, of a text displayed on the screen of the first terminal.

In a possible implementation, the media service apparatus may send the document positioning information to the second terminal.

In the foregoing manner, the media service apparatus sends the document positioning information to the second terminal, and the second terminal may determine the second media data based on the document positioning information, so that synchronization between display content of the first terminal and that of the second terminal can be ensured.

In a possible implementation, the media service apparatus controls the screen display content of the second terminal based on the second media data and collaboration information sent by the first terminal, where the collaboration information indicates a location and/or operation content of an operation triggered by a user on the screen of the first terminal.

In the foregoing manner, the media service apparatus synchronizes, to the second terminal, the collaboration information triggered by the user on the first terminal, to ensure data synchronization between display content of the first terminal and that of the second terminal in the meeting.

In a possible implementation, the media service apparatus performs synthesis processing on the second media data and the collaboration information, and controls the screen display content of the second terminal based on data obtained through the synthesis processing.

In a possible implementation, when the media service apparatus and the second terminal are separately deployed, the media service apparatus may send the collaboration information and the second media data to the second terminal, where the collaboration information and the second media data may be used to be displayed on the screen of the second terminal in a superimposed manner.

According to a second aspect, an embodiment of this application further provides a data transmission apparatus. The data transmission apparatus has functions of implementing behavior of the media service apparatus in the method instance according to the first aspect. For beneficial effects, refer to the descriptions in the first aspect. Details are not described herein again. The functions may be implemented by hardware, or may be implemented by executing corresponding software by hardware. The hardware or software includes one or more modules corresponding to the foregoing functions. In a possible design, a structure of the data transmission apparatus includes a determining unit, a processing unit, and a display control unit. These units may perform corresponding functions in the method example according to the first aspect. For details, refer to the detailed descriptions in the method example. Details are not described herein again.

According to a third aspect, an embodiment of this application further provides a computing device. The computing device has functions of implementing behavior of the terminal device in the method instance according to the first aspect. For beneficial effects, refer to the descriptions in the first aspect. Details are not described herein again. A structure of the computing device includes a processor and a memory. The processor is configured to support a computing apparatus in performing corresponding functions in the first aspect. The memory is coupled to the processor, and stores computer program instructions and data that are necessary for the computing apparatus. A communication interface is further included in the structure of the computing device, and is configured to communicate with another device.

According to a fourth aspect, an embodiment of this application further provides a computing device cluster. The computing device cluster has functions of implementing behavior of the terminal device in the method instance according to the first aspect. For beneficial effects, refer to the descriptions in the first aspect. Details are not described herein again. The computing device cluster includes at least one computing device. A structure of any computing device includes a processor and a memory. The processor in the any computing device is configured to support a computing apparatus in performing some or all functions in the first aspect and the possible implementations of the first aspect. The memory is coupled to the processor, and stores computer program instructions and data that are necessary for the computing apparatus. A communication interface is further included in the structure of the computing device, and is configured to communicate with another device.

According to a fifth aspect, this application further provides a computer-readable storage medium. The computer-readable storage medium stores instructions, and when the instructions are run on a computer, the computer is enabled to perform the method according to the first aspect and the possible implementations of the first aspect.

According to a sixth aspect, this application further provides a computer program product including instructions. When the computer program product runs on a computer, the computer is enabled to perform the method according to the first aspect and the possible implementations of the first aspect.

According to a seventh aspect, this application further provides a computer chip. The chip is connected to a memory, and the chip is configured to read and execute a software program stored in the memory, to perform the method according to the first aspect and the possible implementations of the first aspect.

### BRIEF DESCRIPTION OF DRAWINGS

FIG. 1A is a diagram of an architecture of a data transmission system according to an embodiment of this application;
FIG. 1B is a diagram of an architecture of a data transmission system according to an embodiment of this application;
FIG. 2 is a flowchart of a data transmission method according to an embodiment of this application;
FIG. 3 is a diagram of a display interface of a terminal according to an embodiment of this application;
FIG. 4 is a diagram of data sharing of a terminal according to an embodiment of this application;
FIG. 5 is a diagram of a display page of a meeting APP according to an embodiment of this application;
FIG. 6 is a diagram of an architecture of a data transmission system according to an embodiment of this application;
FIG. 7 is a diagram of screen display content of a terminal according to an embodiment of this application;
FIG. 8 is a schematic flowchart of data transmission according to an embodiment of this application;
FIG. 9 is a schematic flowchart of data transmission according to an embodiment of this application;
FIG. 10A and FIG. 10B are a schematic flowchart of data transmission according to an embodiment of this application;
FIG. 11 is a diagram of screen display content of a terminal according to an embodiment of this application;
FIG. 12 is a diagram of an architecture of a data transmission system according to an embodiment of this application;
FIG. 13 is a schematic flowchart of data transmission according to an embodiment of this application;
FIG. 14 is a schematic flowchart of data transmission according to an embodiment of this application;
FIG. 15 is a diagram of a structure of a data transmission apparatus according to an embodiment of this application;
FIG. 16 is a diagram of a structure of a computing device according to an embodiment of this application; and
FIG. 17 is a diagram of a structure of a computing device cluster according to an embodiment of this application.

### DESCRIPTION OF EMBODIMENTS

To make the objective, technical solutions, and advantages of embodiments of this application clearer, the following describes embodiments of this application in detail with reference to the accompanying drawings. Terms used in implementations of this application are merely used to explain specific embodiments of this application, but are not intended to limit this application.

In embodiments of this application, "a plurality of" means two or more. In view of this, in embodiments of this application, "a plurality of" may also be understood as "at least two". "At least one" may be understood as one or more, for example, one, two, or more. For example, "include at least one" means "include one, two, or more", and there is no limitation on which is included. For example, "include at least one of A, B, and C" may mean "include A, B, or C", "include A and B, A and C, or B and C", or "include A, B, and C". The term "and/or" describes an association relationship for describing associated objects and represents that three relationships may exist. For example, A and/or B may represent the following three cases: Only A exists, both A and B exist, and only B exists. In addition, unless otherwise specified, the character "/" generally represents an "or" relationship between the associated objects.

Unless otherwise specified, ordinal numbers such as "first" and "second" in embodiments of this application are used to distinguish between a plurality of objects, and are not intended to limit a sequence, a time sequence, priorities, or importance of the plurality of objects.

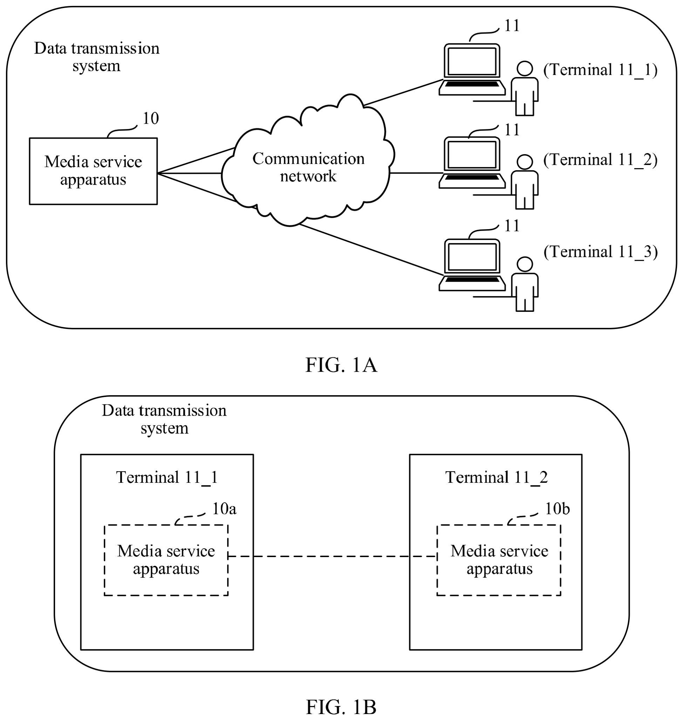

FIG. 1A is a diagram of an architecture of a data transmission system. The data transmission system includes a media service apparatus 10 and at least two terminals 11 (for example, represented as a terminal 11_1, a terminal 11_2, and a terminal 11_3). The at least two terminals 11 may access the media service apparatus 10 over a communication network, and the at least two terminals 11 may access a meeting created by using the media service apparatus 10.

The at least two terminals 11 include one first terminal. The first terminal may be a terminal (for example, the terminal 11_1) that initiates data sharing, and other terminals are second terminals (for example, the terminal 11_2 and the terminal 11_3). When the terminal 11_1 initiates data sharing, the media service apparatus 10 determines first media data displayed on a screen of the terminal 11_1, where the first media data includes text data in a first language. If the terminal 11_2 selects to use a second language, the media service apparatus 10 generates second media data corresponding to the first media data, where the second media data includes text data in the second language. The media service apparatus 10 controls screen display content of the terminal 11_2 based on the second media data. For example, the media service apparatus 10 sends the second media data to the terminal 11_2, and the terminal 11_2 may display the second media data on a screen; or the media service apparatus 10 sends address information of the second media data to the terminal 11_2, and the terminal 11_2 may obtain the second media data based on the address information, and display the second media data on a screen.

In this embodiment of this application, when the first terminal initiates data sharing and a language used by the second terminal is different from that used by the first terminal, for example, the first terminal uses the first language, and the second terminal uses the second language, the media service apparatus may generate, based on the first media data (including text content in the first language) displayed on a screen of the first terminal, the second media data (including text content in the second language) corresponding to the first media data, and the second media data may be displayed on a screen of the second terminal. In this way, a user of the second terminal may view, in a meeting, media data suitable for a language habit of the user, to implement flexible transmission of the media data in a video meeting scenario, further improving user experience.

In the architecture of the data transmission system shown in FIG. 1A, the at least two terminals 11 and the media service apparatus 10 may be independently deployed. Alternatively, in a possible implementation, the media service apparatus 10 may be deployed on the terminal 11. For example, in a structure of a data transmission system shown in FIG. 1B, the data transmission system includes a media service apparatus 10 and at least two terminals 11 (for example, represented as a terminal 11_1 and a terminal 11_2), and the media service apparatus 10 is deployed on each terminal in a distributed manner; or each terminal 11 in the data transmission system includes one media service apparatus 10 (for example, the terminal 11_1 includes a media service apparatus 10a, and the terminal 11_2 includes a media service apparatus 10b). The at least two terminals 11 may access a same meeting.

The at least two terminals 11 include one first terminal. The first terminal may be a terminal (for example, the terminal 11_1) that initiates data sharing, and other terminals are second terminals (for example, the terminal 11_2). When the terminal 11_1 initiates data sharing, the media service apparatus 10a deployed on the terminal 11_1 may determine first media data displayed on a screen of the terminal 11_1, where the first media data includes text data in a first language. If the terminal 11_2 selects to use a second language, the media service apparatus 10a generates second media data corresponding to the first media data (or the media service apparatus 10a sends the first media data to the media service apparatus 10b, and the media service apparatus 10b generates the second media data corresponding to the first media data), where the second media data includes text data in the second language. The media service apparatus 10b controls screen display content of the terminal 11_2 based on the second media data. For example, the media service apparatus 10b controls the second media data to be displayed on a screen of the second terminal; or the media service apparatus obtains the second media data based on address information of the second media data, and displays the second media data on a screen of the second terminal.

It should be noted that the architecture of the data transmission system to which this application is applicable may be shown in FIG. 1A or FIG. 1B, but is not limited to the architecture shown in FIG. 1A or FIG. 1B. In an actual scenario, a specific deployment form of the apparatus in the data transmission system is not limited.

The terminal 11 may be a meeting terminal device, or the terminal 11 may be a portable terminal device, for example, a mobile phone, a tablet computer, a notebook computer, a wearable device, or an intelligent screen device. The media service apparatus 10 may be a physical server, or a device cluster including a plurality of physical devices.

The media service apparatus 10 may be implemented by using software, or may be implemented by using hardware.

For example, the following describes an implementation of the media service apparatus 10.

The media service apparatus 10 is used as an example of a software functional unit. The media service apparatus 10 may include code running on a computing instance. The computing instance may be at least one of computing devices such as a physical host (computing device), a virtual machine, and a container. Further, there may be one or more computing devices. For example, the media service apparatus 10 may include code running on a plurality of hosts/virtual machines/containers. It should be noted that the plurality of hosts/virtual machines/containers configured to run the application program may be distributed in a same region (region), or may be distributed in different regions. The plurality of hosts/virtual machines/containers configured to run the code may be distributed in a same availability zone (availability zone, AZ), or may be distributed in different AZs. Each AZ includes one data center or a plurality of data centers with similar geographical locations. Generally, one region may include a plurality of AZs.

Similarly, the plurality of hosts/virtual machines/containers configured to run the code may be distributed in a same virtual private cloud (virtual private cloud, VPC), or may be distributed in a plurality of VPCs. Generally, one VPC is disposed in one region. For cross-region communication between two VPCs in a same region and between VPCs in different regions, a communication gateway needs to be disposed in each VPC, and interconnection between the VPCs is implemented through the communication gateway.

The media service apparatus 10 is used as an example of a hardware functional unit. The media service apparatus 10 may include at least one computing device, for example, a server. Alternatively, the media service apparatus 10 may be a device implemented by using an application-specific integrated circuit (application-specific integrated circuit, ASIC), a programmable logic device (programmable logic device, PLD), or the like. The PLD may be implemented by using a complex programmable logical device (complex programmable logical device, CPLD), a field-programmable gate array (field-programmable gate array, FPGA), a generic array logic (generic array logic, GAL), or any combination thereof.

A plurality of computing devices included in the media service apparatus 10 may be distributed in a same region, or may be distributed in different regions. The plurality of computing devices included in the media service apparatus 10 may be distributed in a same AZ, or may be distributed in different AZs. Similarly, the plurality of computing devices included in the media service apparatus 10 may be distributed in a same VPC, or may be distributed in a plurality of VPCs. The plurality of computing devices may be any combination of computing devices such as a server, an ASIC, a PLD, a CPLD, an FPGA, and GAL.

The following uses the architecture of the data transmission system shown in FIG. 1A as an example to describe a data transmission method provided in embodiments of this application.

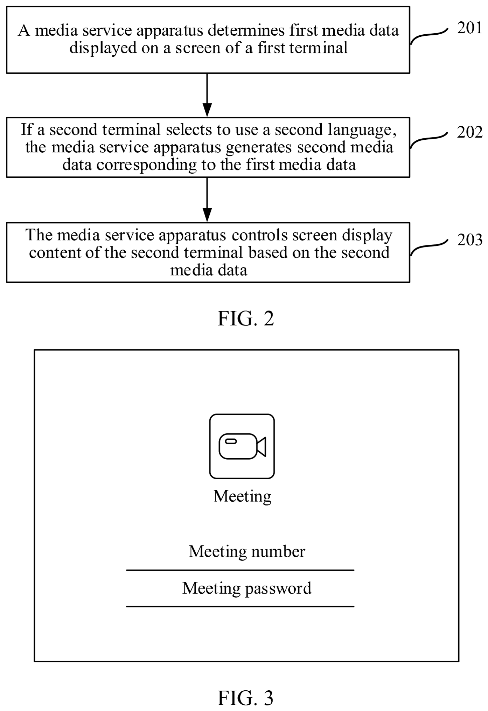

FIG. 2 shows a data transmission method according to an embodiment of this application. The method may include the following steps.

Step 201: A media service apparatus determines first media data displayed on a screen of a first terminal.

In a procedure of the data transmission method shown in FIG. 2, the first terminal and a second terminal may access the media service apparatus, and the first terminal and the second terminal are in a same meeting created by using the media service apparatus. In the meeting, the first terminal may be a data sharing initiator. In the meeting, there may be one or more second terminals. A quantity of second terminals is not limited in this embodiment of this application.

In an implementation, a user may operate a terminal to run a meeting APP (Meeting) on the terminal, and access a meeting by using the meeting APP. As shown in FIG. 3, a user may click a meeting APP installed on a terminal to start running the meeting APP; and may access a meeting by entering a meeting number or the meeting number and a meeting password on a display page of the meeting APP.

It should be noted that, a terminal that creates a meeting by using the media service apparatus may be either of the first terminal and the second terminal. For example, after creating a meeting, the first terminal notifies a user operating the second terminal of a meeting number or the meeting number and a meeting password of the created meeting. Alternatively, a terminal that creates a meeting may be a third-party terminal other than the first terminal and the second terminal. After the meeting is created by using the media service apparatus, a meeting number or the meeting number and a meeting password of the created meeting is notified to users operating the first terminal and the second terminal.

In the following descriptions, for ease of description, the user operating the first terminal may be referred to as a first user, and the user operating the second terminal may be referred to as a second user.

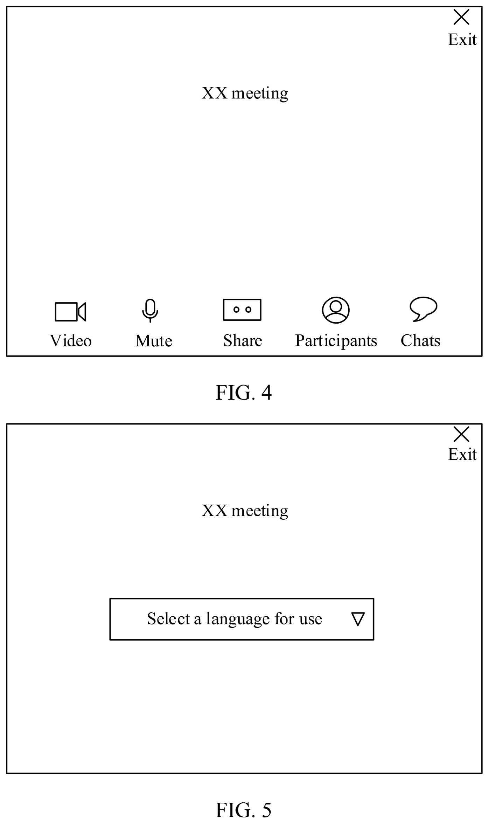

After the first terminal and the second terminal access the meeting, when the first terminal is the data sharing initiator, the user operating the first terminal may trigger a data sharing instruction, and select a meeting file to be shared in the meeting. As shown in a diagram of data sharing in FIG. 4, the meeting APP runs on the first terminal. The first user may trigger the data sharing instruction by clicking a "share" control on a display page of the meeting APP, and then the first user may select, from the display page of the meeting APP, a meeting file that needs to be shared to initiate data sharing.

In a possible implementation, the first terminal sends the data sharing instruction to the media service apparatus, and in response to the data sharing instruction, the media service apparatus determines the first media data displayed on the screen of the first terminal. Optionally, the first media data includes text content in a first language.

Step 202: If the second terminal selects to use a second language, the media service apparatus generates second media data corresponding to the first media data.

Optionally, when accessing the meeting, the second terminal may select a language used in the meeting. For example, on a display page of the meeting APP shown in FIG. 5, the display page may include an option for selecting a meeting language, and the second user may select a language to be used by the second terminal. For example, when a common language of the second user is English, the second user may select to use "English".

When the first media data displayed on the screen of the first terminal includes the text content in the first language, if the common language of the second user is the second language, and the language selected to be used by the second terminal is the second language, the first language and the second language are different languages (for example, the first language is Chinese, and the second language is English). In this case, because the common language of the second user is the second language, if the first media data is directly displayed on a screen of the second terminal, the second user may not understand displayed content on the screen, affecting user experience of the second user. In view of this, when the media service apparatus determines that the language selected to be used by the second terminal is different from the language used by the text in the first media data displayed on the screen of the first terminal, the media service apparatus determines the second media data corresponding to the first media data.

Optionally, the second media data includes text content in the second language.

It should be noted that the text content in the first language included in the first media data and the text content in the second language included in the second media data represent a same meaning. It may be understood as that after the text content in the first language is translated into the second language, the text content in the second language may be obtained.

Step 203: The media service apparatus controls screen display content of the second terminal based on the second media data.

After determining the second media data corresponding to the first media data, the media service apparatus may control the screen display content of the second terminal based on the second media data.

A manner in which the media service apparatus controls the screen display content of the second terminal may be as follows: The media service apparatus may send the second media data to the second terminal, and the second terminal performs screen display based on the second media data; or the media service apparatus may send address information of the second media data to the second terminal, and after receiving the second media data, the second terminal obtains the second media data based on the address information of the second media data, and displays the second media data on the screen.

In this embodiment of this application, in a meeting including the first terminal and the second terminal, when determining that a language used by the first media data displayed on the first terminal used as a data sharing end is different from a language selected by the second terminal, the media service apparatus may determine, based on the language selected by the second terminal, the second media data corresponding to the first media data, and display the second media data on the screen of the second terminal, to meet a requirement of users of a plurality of different languages in the meeting, and improve user experience of participants.

According to the data transmission solution provided in this embodiment of this application, the first terminal and the second terminal access the same meeting, and when the first terminal initiates data sharing, display content on the screen of the first terminal is synchronized with that on the screen of the second terminal by using the media service apparatus. When the text content of the first media data displayed on the first terminal is the first language, and the second terminal selects to use the second language, the media service apparatus may control the screen display content of the second terminal based on the second media data including the text content in the second language. Based on the foregoing data transmission solution, this embodiment of this application may have a plurality of implementations. For example, in Implementation 1, the media service apparatus translates the text content of the first media data to obtain the second media data, and sends the second media data obtained through translation to the second terminal. In Implementation 2, online documents of a plurality of languages are provided, the first terminal uses an online document in the first language, and the media service apparatus indicates an online document in the second language to the second terminal.

The following separately describes different implementations.

### Implementation 1:

In Implementation 1, the first media data displayed on the screen of the first terminal is a first video frame in a target video obtained by recording the screen of the first terminal, and the second media data is a second video frame.

The first user operates the first terminal to display a meeting file on the screen of the first terminal. The meeting file may include but is not limited to: an image file, a video file, an audio file, and an office file (for example, a Word file, an Excel file, a portable document format (Portable Document Format, PDF) file, and a PowerPoint (PowerPoint, PPT) file). The meeting file includes the text content in the first language. For example, if the first language is Chinese, the text content in the meeting file is a Chinese text.

When the meeting file is displayed on the screen of the first terminal, the first terminal performs screen recording to obtain the target video.

In an optional implementation, the first terminal sends the target video to the media service apparatus, and the media service apparatus determines the first video frame from the target video, and when the second terminal selects to use the second language, determines the second video frame corresponding to the first video frame, where the second video frame includes the text content in the second language. After determining the second video frame, the media service apparatus sends the second video frame to the second terminal.

It should be noted that, when the media service apparatus is implemented by using hardware, the functions performed by the media service apparatus may be performed by one device, for example, a media server, or may be performed by a plurality of devices in cooperation, for example, the media server and a media gateway in cooperation.

The following uses an example in which the media service apparatus is executed by a plurality of devices in cooperation for description.

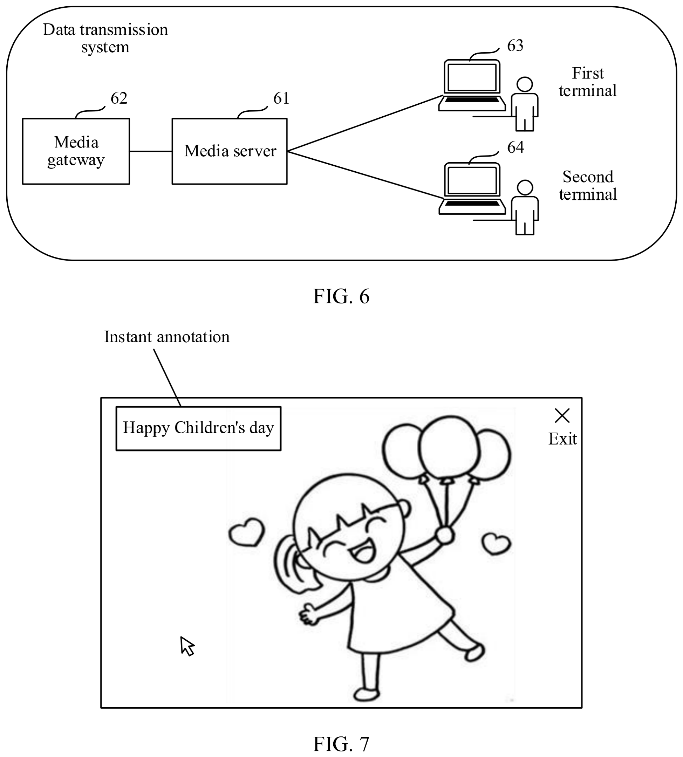

Optionally, Implementation 1 of this application is applicable to an architecture of a data transmission system shown in FIG. 6. The data transmission system includes a media server 61, a media gateway 62, a first terminal 63, and a second terminal 64. The media server 61 and the media gateway 62 may cooperate to perform the functions of the media service apparatus.

The media server 61 receives a target video sent by the first terminal 63, and forwards the target video of the first terminal 63 to the media gateway 62. The media gateway 62 determines a first video frame from the target video, and determines a second video frame corresponding to the first video frame when the second terminal 64 selects to use a second language. The media gateway 62 sends the second video frame to the media server 61. After receiving the second video frame, the media server 61 sends the second video frame to the second terminal 64. The second terminal 64 displays the second video frame on a screen.

After receiving the target video forwarded by the media server, the media gateway determines the first video frame from the target video, where the first video frame is a video frame that is in the target video and whose display content is changed compared with that of a previous frame. For example, the target video includes a video frame 1, a video frame 2, a video frame 3, a video frame 4, a video frame 5, a video frame 6, a video frame 7, a video frame 8, and a video frame 9. If display content in the video frame 3 is different from display content in the video frame 2, and display content in the video frame 8 is different from display content in the video frame 9, the video frame 3 and the video frame 8 are first video frames.

The media gateway may determine the first video frame from the target video in a plurality of different manners. The following provides detailed descriptions.

Manner 1 of determining the first video frame: The media gateway determines the first video frame from the target video based on a bit rate corresponding to the target video.

Optionally, the media gateway detects a bit rate of each video frame in the target video, and when detecting that the bit rate of the target video increases, determines that a video frame whose bit rate increases is the first video frame.

Because the first video frame that is changed compared with the previous frame generally includes more details, to maintain stability of picture quality of the video frame, more bit rates need to be used to encode and transmit these details. During video encoding, the bit rate determines a quantity of bits transmitted per second. When content in a picture becomes more complex or moves more frequently, an encoder needs to allocate more bits to indicate the changes to maintain the image quality. It may also be understood as that the encoder needs a higher bit rate to capture and transmit changed information to avoid quality problems such as blurring, distortion, or pixelization of the picture. Therefore, the media gateway determines the first video frame when detecting that the bit rate suddenly increases.

Manner 2 of determining the first video frame: The media gateway compares frame data of each video frame in the target video, and determines the first video frame from the target video.

Optionally, the media gateway compares frame data of every two adjacent video frames in the target video, and determines a change rate between every two adjacent video frames; and determines a video frame whose change rate compared with a previous frame is greater than a threshold as the first video frame.

In an implementation, the media gateway may calculate a similarity between frame data of two adjacent video frames according to an image similarity algorithm. A higher similarity indicates a smaller change rate between two adjacent video frames. On the contrary, a lower similarity indicates a larger change rate between two adjacent video frames. Therefore, for example, the media gateway may use a reciprocal of the similarity as the change rate.

After determining the first video frame, the media gateway determines the language selected to be used by the second terminal, and when determining that the second terminal selects to use the second language, determines the second video frame corresponding to the first video frame.

In a possible implementation, the media gateway translates text content in the first video frame, to obtain the second video frame corresponding to the first video frame.

In an implementation, the media gateway translates the text content in the first video frame into the second language, to obtain the second video frame including the text content in the second language.

The media gateway may obtain, in a manner of invoking an AI service, the second video frame including the text content in the second language. The AI service may be a service integrated into the media gateway. For example, the AI service may be a translation tool installed on the media gateway. Alternatively, the AI service may be a cloud service that performs a translation function, and the media gateway may invoke the cloud service, to translate the text content in the first video frame.

In a process in which the AI service generates the second video frame, the AI service may extract text content from the first video frame, translate the text content in the first language into the second language, and then fuse the text content in the second language and content other than the text in the first video frame, to obtain the second video frame. Alternatively, the AI service may directly replace the text content in the first language in the first video frame with the text content in the second language.

The foregoing describes a process in which the media gateway determines the first video frame and the second video frame when the first video frame is the video frame that is in the target video and whose display content is changed compared with that of the previous frame. In this embodiment of this application, the first video frame may alternatively be each frame in the target video. It may be understood as that the media gateway translates text content in each frame in the target video, to obtain a second video frame corresponding to each frame.

After determining the second video frame corresponding to the first video frame, the media gateway sends the second video frame to the media server. In Implementation 1 of this application, for step 203, a manner in which the media server controls the screen display content of the second terminal may be: The media server sends the second video frame to the second terminal. Correspondingly, after receiving the second video frame, the second terminal may perform display on the screen based on the received second video frame.

In addition, in this embodiment of this application, in a process in which the first terminal initiates data sharing, the first user may perform a collaboration operation on the screen of the first terminal. For example, when the first terminal is a computer, the first user may move a mouse in a data sharing process, or perform instant annotation in a meeting file.

Collaboration information, which is generated due to the collaboration operation triggered by the first user on the screen of the first terminal, is generally drawn by an operating system on an upper layer of the screen, and does not belong to an image displayed on the screen, where the collaboration information indicates a location and/or operation content (for example, a mouse location and/or a location and content of an instant annotation on the screen) of an operation triggered by the first user on the screen of the first terminal. Therefore, the target video obtained by the first terminal by performing screen recording does not include the collaboration information.

The instant annotation in this embodiment of this application may be a vector graph or a lattice graph that is formed by the first user on the first terminal by using a mouse, a stylus, or input text, and is used as an upper layer to cover a background picture. For example, the instant annotation triggered by the first user on the screen of the first terminal may be an annotation for highlighting some content on the screen. As shown in screen display content of the first terminal in FIG. 7, the first user may draw a rectangular box on a text displayed on the screen of the first terminal, to highlight the text, where the rectangular box is an instant annotation triggered by the first user.

In view of this, in this embodiment of this application, the first terminal may further send the collaboration information to the media server. After receiving the collaboration information, the media server synchronizes the collaboration information of the first terminal to another terminal that accesses the meeting. The following describes several manners in which the media server synchronizes the collaboration information of the first terminal to the second terminal.

Synchronization manner 1: The media server sends the collaboration information of the first terminal to the second terminal, and the second terminal displays the collaboration information and the second video frame in a superimposed manner.

In Synchronization manner 1, after receiving the collaboration information sent by the first terminal, the media server sends the collaboration information to the second terminal. Optionally, the media server may simultaneously send the second video frame and the collaboration information to the second terminal, or the media server may separately send the second video frame and the collaboration information to the second terminal. This is not limited in this embodiment of this application.

After receiving the second video frame and the collaboration information, the second terminal displays the collaboration information and the second video frame in a superimposed manner.

Optionally, the collaboration information includes mouse information and/or annotation information, where the mouse information includes location information of the mouse on the screen of the first terminal, and the annotation information includes annotation content and/or annotation location information.

If the collaboration information received by the second terminal includes the mouse information and the annotation information, the second terminal may separately use the second video frame, the mouse information, and the annotation information as one layer, and render the three layers together, to perform superimposed display.

Synchronization manner 2: The media server sends the collaboration information of the first terminal to the media gateway, and the media gateway synthesizes the collaboration information into the second video frame.

In Synchronization manner 2, after receiving the collaboration information sent by the first terminal, the media server sends the collaboration information to the media gateway. Optionally, the media server may simultaneously send the target video and the collaboration information to the media gateway, or the media server separately sends the target video and the collaboration information to the media gateway. This is not limited in this embodiment of this application.

After determining the first video frame from the target video, the media gateway translates the text content in the first video frame, to obtain a reference video frame, where the reference video frame includes the text content in the second language. The media gateway performs synthesis processing on the collaboration information and the reference video frame, to obtain the second video frame.

Optionally, the collaboration information includes mouse information and/or annotation information, where the mouse information includes location information of the mouse on the screen of the first terminal, and the annotation information includes annotation content and/or annotation location information.

If the collaboration information includes the mouse information and the annotation information, the media gateway may separately use the reference video frame, the mouse information, and the annotation information as one layer, and perform synthesis processing on the three layers, to synthesize the second video frame.

In Synchronization manner 2, the media gateway sends the synthesized second video frame to the media server, the media server sends the second video frame to the second terminal, and the second terminal may directly display the received second video frame on the screen.

It should be noted that, in this embodiment of this application, the media server may synchronize the collaboration information of the first terminal to the second terminal in any one of the foregoing manners. For some special terminals, for example, when the second terminal is a terminal that does not have a collaboration information superimposition capability (the second terminal does not have a capability of displaying the second video frame and the collaboration information in a superimposed manner), the media server synchronizes the collaboration information of the first terminal to the second terminal in the foregoing Synchronization manner 2.

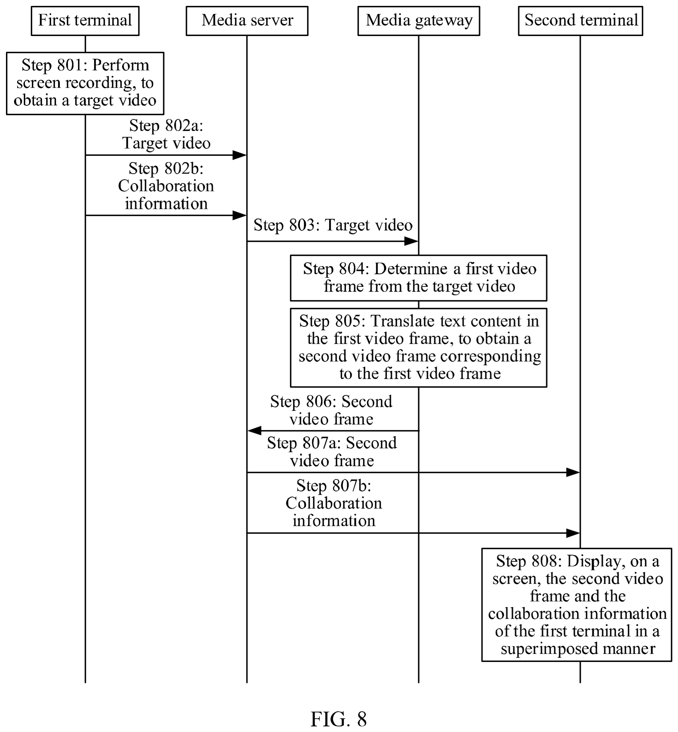

With reference to FIG. 8, the following describes a data transmission procedure in Implementation 1 of this application in the architecture of the data transmission system shown in FIG. 6. In the procedure shown in FIG. 8, a media server synchronizes collaboration information of a first terminal to a second terminal in the foregoing Synchronization manner 1.

Step 801: The first terminal performs screen recording, to obtain a target video.

The target video obtained by the first terminal by performing screen recording may include a plurality of video frames.

Step 802a: The first terminal sends the target video to the media server.

Step 802b: The first terminal sends the collaboration information to the media server.

The collaboration information is information that is generated based on a collaboration operation triggered by a first user on a screen of the first terminal and that indicates a location and/or operation content of an operation triggered by the user on the screen of the first terminal.

It should be noted that step 802a and step 802b may be performed in one step, or step 802a and step 802b are respectively performed in two steps. A sequence of performing step 802a and step 802b is not limited.

Step 803: The media server sends the target video to a media gateway.

Step 804: The media gateway determines a first video frame from the target video.

The first video frame is a video frame that is in the target video and whose display content is changed compared with that of a previous frame.

For a manner in which the media gateway translates text content in the first video frame, refer to the plurality of manners of determining the first video frame described above.

Step 805: When the second terminal selects to use a second language, the media gateway translates the text content in the first video frame, to obtain a second video frame corresponding to the first video frame.

For a manner in which the media gateway translates the text content in the first video frame, refer to the foregoing descriptions.

Step 806: The media gateway sends the second video frame to the media server.

Step 807a: The media server sends the second video frame to the second terminal.

Step 807b: The media server sends the collaboration information of the first terminal to the second terminal.

It should be noted that step 807a and step 807b may be performed in one step, or step 807a and step 807b are respectively performed in two steps. A sequence of performing step 807a and step 807b is not limited.

Step 808: The second terminal displays, on a screen, the second video frame and the collaboration information of the first terminal in a superimposed manner.

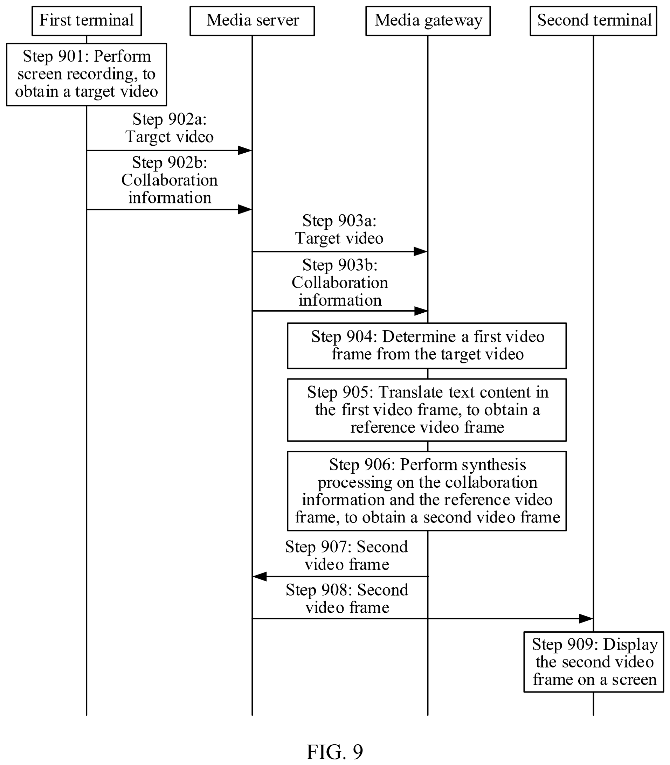

With reference to FIG. 9, the following describes a data transmission procedure in Implementation 1 of this application in the architecture of the data transmission system shown in FIG. 6. In the procedure shown in FIG. 9, a media server synchronizes collaboration information of a first terminal to a second terminal in the foregoing Synchronization manner 2.

Step 901: The first terminal performs screen recording, to obtain a target video.

The target video obtained by the first terminal by performing screen recording may include a plurality of video frames.

Step 902a: The first terminal sends the target video to the media server.

Step 902b: The first terminal sends the collaboration information to the media server.

The collaboration information is information that is generated based on a collaboration operation triggered by a first user on a screen of the first terminal and that indicates a location and/or operation content of an operation triggered by the user on the screen of the first terminal.

It should be noted that step 902a and step 902b may be performed in one step, or step 902a and step 902b are respectively performed in two steps. A sequence of performing step 902a and step 902b is not limited.

Step 903a: The media server sends the target video to a media gateway.

Step 903b: The media server sends the collaboration information of the first terminal to the media gateway.

It should be noted that step 903a and step 903b may be performed in one step, or step 903a and step 903b are respectively performed in two steps. A sequence of performing step 903a and step 903b is not limited.

Step 904: The media gateway determines a first video frame from the target video.

The first video frame is a video frame that is in the target video and whose display content is changed compared with that of a previous frame.

For a manner in which the media gateway translates text content in the first video frame, refer to the plurality of manners of determining the first video frame described above.

Step 905: When the second terminal selects to use a second language, the media gateway translates the text content in the first video frame, to obtain a reference video frame.

The reference video frame includes text content in the second language.

Step 906: The media gateway performs synthesis processing on the collaboration information and the reference video frame, to obtain a second video frame.

Step 907: The media gateway sends the second video frame to the media server.

Step 908: The media server sends the second video frame to the second terminal.

Step 909: The second terminal displays the second video frame on a screen.

It should be noted that, when the media service apparatus is executed by one device, for example, by the media server, the functions performed by the media server and the media gateway described above may both be performed by the media server. For the functions performed by the media server, refer to the functions performed by the media server and the media gateway described above. Details are not described herein again.

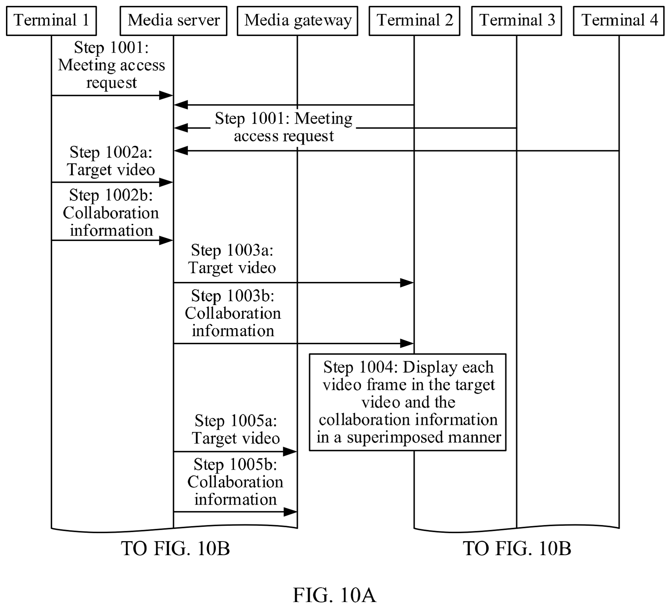

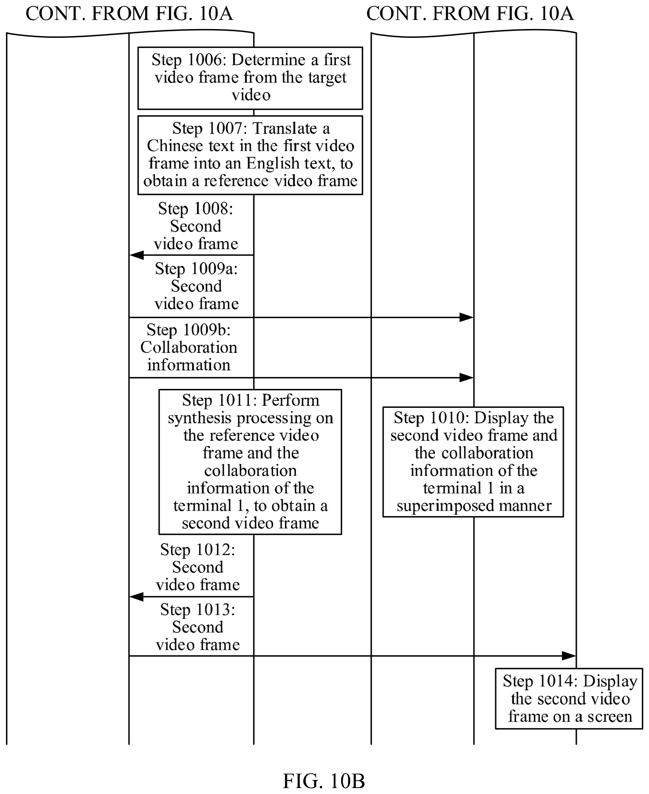

With reference to a specific application scenario, the following describes a data transmission procedure in Implementation 1 of this application. In this application scenario, a terminal 1, a terminal 2, a terminal 3, and a terminal 4 access a same meeting via a media server, and the meeting supports a plurality of languages. The terminal 1, the terminal 2, and the terminal 3 are terminals having a collaboration information superimposition capability, and the terminal 4 is a terminal that does not have the collaboration information superimposition capability. A flowchart of data transmission shown in FIG. 10A and FIG. 10B may include the following steps.

Step 1001: The terminal 1, the terminal 2, the terminal 3, and the terminal 4 send meeting access requests to the media server, where the meeting access request carries a language type selected by each terminal.

For example, languages selected to be used by the terminal 1 and the terminal 2 are Chinese, and languages selected to be used by the terminal 3 and the terminal 4 are English.

Step 1002a: The terminal 1 initiates a data sharing instruction, and sends a target video to the media server.

A screen of the terminal 1 displays a meeting file used in the meeting, and the terminal 1 may perform screen recording, to obtain the target video.

Step 1002b: The terminal 1 sends collaboration information to the media server.

A user may perform an operation on the meeting file displayed on the screen of the terminal 1, for example, moving a mouse or performing instant annotation in the meeting file. To ensure data synchronization between terminals, the terminal 1 needs to send the collaboration information generated due to the user operation to the media server.

It should be noted that step 1002a and step 1002b may be performed in one step, or step 1002a and step 1002b are respectively performed in two steps. A sequence of performing step 1002a and step 1002b is not limited.

Step 1003a: The media server sends the target video to the terminal 2.

Step 1003b: The media server sends the collaboration information of the terminal 1 to the terminal 2.

It should be noted that step 1003a and step 1003b may be performed in one step, or step 1003a and step 1003b are respectively performed in two steps. A sequence of performing step 1003a and step 1003b is not limited.

Step 1004: The terminal 2 displays, on a screen, each video frame in the target video and the collaboration information of the terminal 1 in a superimposed manner.

Step 1005a: The media server sends the target video to a media gateway.

Step 1005b: The media server sends the collaboration information of the terminal 1 to the media gateway.

It should be noted that step 1005a and step 1005b may be performed in one step, or step 1005a and step 1005b are respectively performed in two steps. A sequence of performing step 1005a and step 1005b is not limited.

Step 1006: The media gateway determines a first video frame from the target video.

The first video frame is a video frame that is in the target video and whose display content is changed compared with that of a previous frame.

For a manner in which the media gateway translates text content in the first video frame, refer to the plurality of manners of determining the first video frame described above.

Step 1007: The media gateway translates a Chinese text in the first video frame into an English text, to obtain a reference video frame.

Step 1008: The media gateway uses the reference video frame as a second video frame corresponding to the first video frame, and sends the second video frame to the media server.

Step 1009a: The media server sends the second video frame to the terminal 3.

Step 1009b: The media server sends the collaboration information of the terminal 1 to the terminal 3.

Step 1010: The terminal 3 displays, on a screen, the second video frame and the collaboration information of the terminal 1 in a superimposed manner.

Step 1011: The media gateway performs synthesis processing on the reference video frame and the collaboration information of the terminal 1, to obtain a second video frame.

Step 1012: The media gateway sends the second video frame to the media server.

It should be noted that content in the second video frame in step 1012 is different from content in the second video frame in step 1008. The second video frame in step 1012 is a video frame into which the collaboration information is not synthesized, and the second video frame in step 1008 is a video frame into which the collaboration information is synthesized.

Step 1013: The media server sends the second video frame to the terminal 4.

Step 1014: The terminal 4 displays the second video frame on a screen.

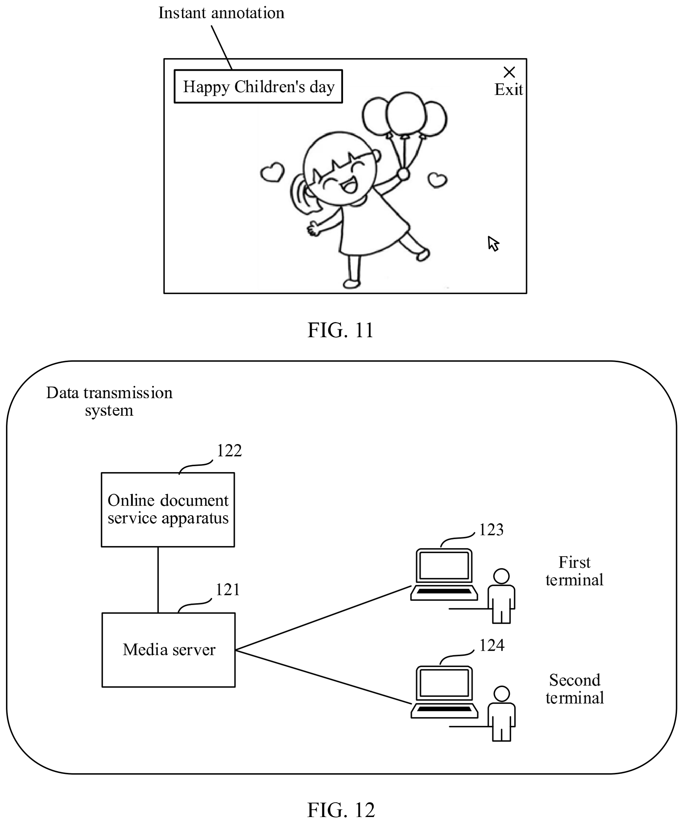

It is assumed that screen display content of the terminal 1 is shown in FIG. 7, and includes text content "Happy Children's day", and the user adds an annotation of a "rectangular box" to the screen display content of the terminal 1. The media server synchronizes the screen display content of the terminal 1 on the terminal 2, the terminal 3, and the terminal 4. If the language selected by the terminal 2 is Chinese, screen display content of the terminal 2 is the same as that of the terminal 1. If the language selected by the terminal 3 and the terminal 4 is English, the media server translates, by using the media gateway, the Chinese text "Happy Children's day" included in the screen display content of the terminal 1 into English, and screen display content of the terminal 3 and the terminal 4 may be shown in FIG. 11.

### Implementation 2:

In Implementation 2, the first media data displayed on the screen of the first terminal is text data of a first online document, and the second media data is text data of a second online document. Languages of the text data of the first online document and the text data of the second online document are different, but represent a same meaning. For example, if the text data of the first online document is a Chinese text, the text data of the second online document is obtained by translating the Chinese text data of the first online document.

The online document may include but is not limited to a Word document, an Excel document, a PDF document, and a PPT document.

In Implementation 2, the functions of the media service apparatus may be performed by the media server. An example in which the media server performs the functions is used in the following descriptions.

Optionally, Implementation 2 of this application is applicable to an architecture of a data transmission system shown in FIG. 12. The data transmission system includes a media server 121, an online document service apparatus 122, a first terminal 123, and a second terminal 124.

The online document service apparatus 122 may store a plurality of online documents of different language types, and meanings represented by text data of the online documents of different language types are the same. It may be understood as that the plurality of online documents of different language types are obtained by performing language translation based on text data of one online document. For example, the plurality of online documents of different language types stored in the online document service apparatus 122 include a Chinese document, an English document, a Japanese document, a Russian document, and the like.

The online document service apparatus 122 generates address information of a corresponding online document for an online document of each language type. The online document service apparatus 122 sends the address information of the online document of each language type to the media server 121. During a meeting, the media server 121 may synchronize screen display content between the first terminal and the second terminal by using an online document.

The following describes in detail a procedure in which the media server synchronizes the screen display content between the first terminal and the second terminal.

The first terminal sends a meeting access request to the media server, where the meeting access request carries a language type selected by the first terminal. The media server sends, based on the language type selected by the first terminal, address information of a first online document corresponding to the selected language type to the first terminal.

After receiving the address information of the first online document, in response to an online document opening operation triggered by a first user, the first terminal displays the first online document on a screen of the first terminal.

Correspondingly, the second terminal sends a meeting access request to the media server, where the meeting access request carries a language type selected by the second terminal. The media server may determine that the first terminal and the second terminal access the same meeting. Optionally, after determining that the second terminal accesses the meeting, the media server may determine, based on the first online document selected by the first terminal, a second online document corresponding to the first online document, where text data of the first online document is a text in a first language, text data of the second online document is a text in a second language, and the text data of the first online document and the text data of the second online document represent a same meaning.

In a possible implementation, after determining that the second terminal accesses the meeting, the media server sends, based on the second language selected by the second terminal, address information of the second online document to the second terminal. Alternatively, after determining that the first terminal initiates data sharing, the media server sends address information of the second online document to the second terminal.

In an implementation, the first terminal may send a data sharing instruction to the media server. After receiving the data sharing instruction sent by the first terminal, the media server sends a notification message to the second terminal, to notify the second terminal to display the second online document. In an implementation, the second terminal may display prompt information on a screen to prompt a second user to open the second online document, and in response to an online document opening operation triggered by the second user, display the second online document on the screen of the second terminal.

To ensure data synchronization between the first terminal and the second terminal, in an optional implementation, the media server may generate, based on the text data of the first online document currently displayed on the screen of the first terminal, second media data corresponding to first media data.

In an implementation, the media server may determine the text data of the second online document based on the address information of the second online document and document positioning information, where the document positioning information is determined based on the text data of the first online document currently displayed on the screen of the first terminal. For example, if the text data of the first online document currently displayed on the screen of the first terminal is content in paragraphs 2 and 3 on page 1, the media server may determine the document positioning information based on the text data of the first online document currently displayed on the screen of the first terminal, and determine, from the second online document based on the document positioning information, content corresponding to paragraphs 2 and 3 on page 1 of the first online document as the second media data.

The first terminal may send first display location information to the media server, where the first display location information represents a page number and/or a paragraph, in the first online document, of a text displayed on the screen of the first terminal. The media server may determine the document positioning information based on the first display location information, and the media server sends the document positioning information to the second terminal, where the document positioning information is used to determine a display text of the second online document, and the display text is a text displayed on the screen of the second terminal.

For example, the first display location information includes the page number and a paragraph number, in the first online document, of the text currently displayed on the screen of the first terminal. For example, the first display location information includes paragraphs 5 to 10 on page 1.

Optionally, the document positioning information sent by the media server to the second terminal may be the first display location information of the first online document. Alternatively, the document positioning information sent by the media server to the second terminal may be second display location information of the second online document, where the second display location information is determined based on the first display location information of the first online document. The following separately provides descriptions.
1. The document positioning information is the first display location information of the first online document.

Because text content of the first online document and text content of the second online document represent a same meaning, during a meeting, the first terminal and the second terminal need to synchronously display texts having the same meaning. However, locations of text content having a same meaning in the first online document and in the second online document may be the same or different.

When the locations of the text content having the same meaning in the first online document and in the second online document are the same, after the media server sends the first display location information to the second terminal, the second terminal displays, on the screen, text content corresponding to the first display location information of the second online document.

For example, if the first display location information sent by the media server to the second terminal includes paragraphs 5 to 10 on page 1, the second terminal displays, on the screen, text content in paragraphs 5 to 10 on page 1 of the second online document.

When the locations of the text content having the same meaning in the first online document and in the second online document are different, after the media server sends the first display location information to the second terminal, the second terminal converts the first display location information into the second display location information, and the second terminal displays, on the screen, text content corresponding to the second display location information of the second online document.

Optionally, the second terminal may pre-store a mapping relationship between the locations of the text content having the same meaning in the first online document and in the second online document. For example, that paragraph 5 on page 1 of the first online document corresponds to paragraph 1 on page 2 of the second online document may be understood as that text content in paragraph 5 on page 1 of the first online document has a same meaning as text content represented in paragraph 1 on page 2 of the second online document.

2. The document positioning information is the second display location information of the second online document.

Because text content of the first online document and text content of the second online document represent a same meaning, during a meeting, the first terminal and the second terminal need to synchronously display texts having the same meaning. However, locations of text content having a same meaning in the first online document and in the second online document may be the same or different.

When the locations of the text content having the same meaning in the first online document and in the second online document are the same, after the media server receives the first display location information sent by the first terminal, the media server may use the first display location information as the second display location information, and send the second display location information to the second terminal; and the second terminal displays, on the screen, text content corresponding to the second display location information of the second online document.

When the locations of the text content having the same meaning in the first online document and in the second online document are different, after the media server receives the first display location information sent by the first terminal, the media server converts the first display location information into the second display location information, and sends the second display location information to the second terminal, and the second terminal displays, on the screen, text content corresponding to the second display location information of the second online document.

Optionally, the media server may pre-store a mapping relationship between the locations of the text content having the same meaning in the first online document and in the second online document. The media server converts the first display location information into the second display location information based on the mapping relationship.

Based on the foregoing manners, via the media server, text content representing a same meaning is displayed on the screens of the first terminal and the second terminal, so that the first terminal and the second terminal keep data synchronization in a meeting process.

In addition, in this embodiment of this application, in a process in which the first terminal initiates data sharing, the first user may perform a collaboration operation on the screen of the first terminal. For example, when the first terminal is a computer, the first user may move a mouse in a data sharing process, or perform instant annotation in the first online document.

Collaboration information is generated due to the collaboration operation triggered by the first user on the screen of the first terminal, where the collaboration information indicates a location and/or operation content (for example, a mouse location, and/or a location and content of an instant annotation on the screen) of an operation triggered by the first user on the screen of the first terminal.

The instant annotation in this embodiment of this application may be a vector graph or a lattice graph that is formed by the first user on the first terminal by using a mouse, a stylus, or input text, and is used as an upper layer to cover a background picture.

To ensure data synchronization between the first terminal and the second terminal, in this embodiment of this application, the first terminal may further send the collaboration information to the media service apparatus. After receiving the collaboration information, the media server synchronizes the collaboration information of the first terminal to the second terminal that accesses the meeting.

In an implementation, the first terminal may simultaneously send the first display location information and the collaboration information to the media server, or the first terminal may separately send the first display location information and the collaboration information to the media server. This is not limited in this embodiment of this application.

After receiving the collaboration information sent by the first terminal, the media server sends the collaboration information to the second terminal. Optionally, the media server may simultaneously send the document positioning information and the collaboration information to the second terminal, or the media server may separately send the document positioning information and the collaboration information to the second terminal. This is not limited in this embodiment of this application.

After receiving the document positioning information and the collaboration information, the second terminal displays the text content of the second online document that is determined based on the document positioning information and the collaboration information in a superimposed manner.

Optionally, the collaboration information includes mouse information and/or annotation information, where the mouse information includes location information of the mouse on the screen of the first terminal, and the annotation information includes annotation content and/or annotation location information.

If the collaboration information received by the second terminal includes the mouse information and the annotation information, the second terminal may separately use the text content of the second online document that is determined based on the document positioning information, the mouse information, and the annotation information as one layer, and render the three layers together, to perform superimposed display.

It should be noted that, when the second terminal is a terminal that does not have a collaboration information superimposition capability, the media server may send the document positioning information and the collaboration information to the media gateway. The media gateway determines the text content of the second online document based on the document positioning information, and performs synthesis processing on the text content of the second online document and the collaboration information, to obtain a target video frame. The media gateway sends the target video frame to the second terminal via the media server, and the second terminal directly displays the target video frame, to ensure synchronization between display content of the second terminal and display content of the first terminal.

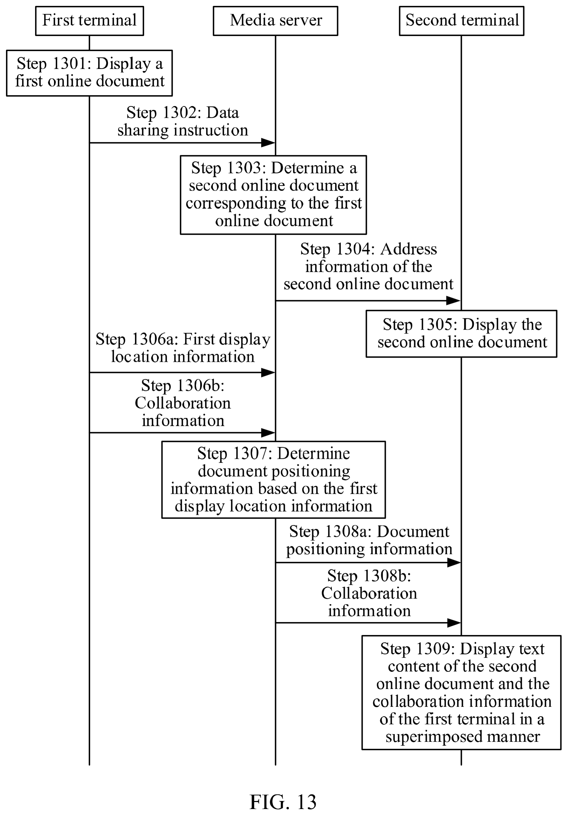

With reference to FIG. 13, the following describes a data transmission procedure in Implementation 2 of this application in the architecture of the data transmission system shown in FIG. 12.

Step 1301: In response to an online document opening operation of a first user, a first terminal displays a first online document on a screen of the first terminal.

Step 1302: The first terminal sends a data sharing instruction to a media server.

For example, the first terminal may access a meeting by running a meeting APP. After the first terminal accesses the meeting, the first user may click a "share" control on a display page of the meeting APP, and the first terminal initiates data sharing. The first terminal sends the data sharing instruction to the media server.

Step 1303: If a second terminal selects to use a second language, the media server determines a second online document corresponding to the first online document.

Text content of the first online document and text content of the second online document are in different languages, but represent a same meaning.

Step 1304: The media server sends address information of the second online document to the second terminal.

In an implementation, for a meeting accessed by the first terminal and the second terminal, when the media server stores addresses of online documents of different language types corresponding to a meeting file, the media server may alternatively send the address information of the second online document to the second terminal after the second terminal accesses the meeting. In this way, after receiving the data sharing instruction sent by the first terminal, the media server sends a notification message to the second terminal. After receiving the notification message, the second terminal may display prompt information in the display interface of the meeting APP, to prompt a second user to open the second online document.

Step 1305: In response to an online document opening operation of the second user, the second terminal displays the second online document on a screen of the second terminal.

Step 1306a: The first terminal sends first display location information to the media server, where the first display location information represents a page number and/or a paragraph, in the first online document, of a text displayed on the screen of the first terminal.

Step 1306b: The first terminal sends collaboration information to the media server, where the collaboration information indicates a location and/or operation content of an operation triggered by the first user on the screen of the first terminal.

It should be noted that step 1306a and step 1306b may be performed in one step, or step 1306a and step 1306b are respectively performed in two steps. A sequence of performing step 1306a and step 1306b is not limited.

Step 1307: The media server determines document positioning information based on the first display location information.

In an implementation, the media server may directly use the first display location information as the document positioning information. Alternatively, the media server determines, based on a mapping relationship between locations of text content having a same meaning in the first online document and in the second online document, second display location information of the second online document corresponding to the first display location information, and uses the second display location information as the document positioning information.

Step 1308a: The media server sends the document positioning information to the second terminal.

Step 1308b: The media server sends the collaboration information of the first terminal to the second terminal.

It should be noted that step 1308a and step 1308b may be performed in one step, or step 1308a and step 1308b are respectively performed in two steps. A sequence of performing step 1308a and step 1308b is not limited.

Step 1309: The second terminal displays, on the screen, the text content of the second online document that is determined based on the document positioning information and the collaboration information of the first terminal in a superimposed manner.

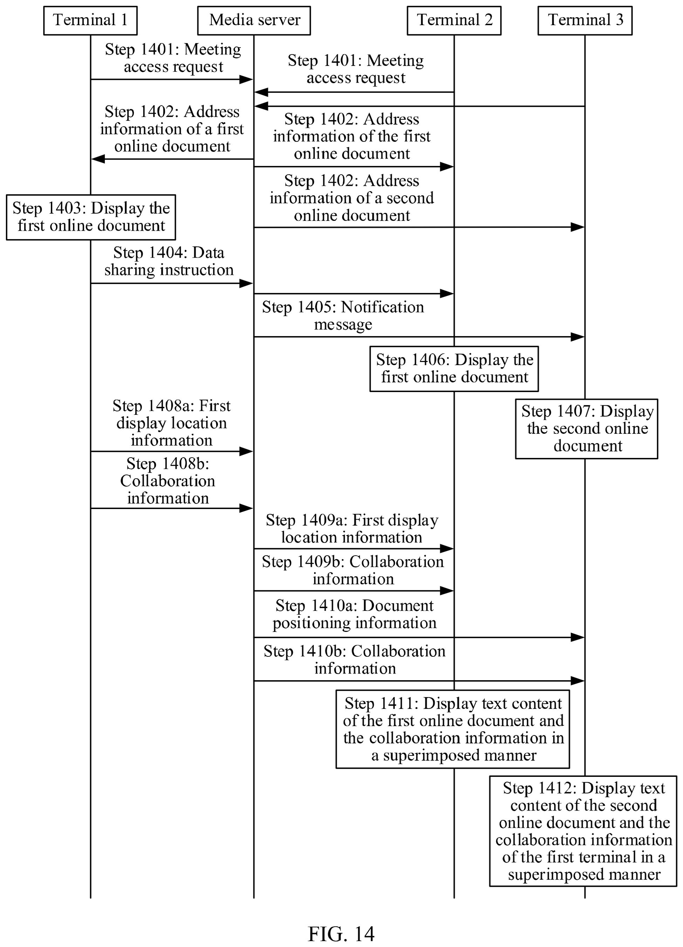

With reference to a specific application scenario, the following describes a data transmission procedure in Implementation 1 of this application. In this application scenario, a terminal 1, a terminal 2, and a terminal 3 access a same meeting via a media server, and the meeting supports a plurality of languages. The terminal 1, the terminal 2, and the terminal 3 are terminals having a collaboration information superimposition capability. An operator of the terminal 1 is a user 1, an operator of the terminal 2 is a user 2, and an operator of the terminal 3 is a user 3. A flowchart of data transmission shown in FIG. 14 may include the following steps.

Step 1401: The terminal 1, the terminal 2, and the terminal 3 send meeting access requests to the media server, where the meeting access request carries a language type selected by each terminal.

For example, languages selected to be used by the terminal 1 and the terminal 2 are Chinese, and a language selected to be used by the terminal 3 is English.

Step 1402: The media server sends address information of a first online document to the terminal 1 and the terminal 2, and sends address information of a second online document to the terminal 3.

Text content of the first online document is Chinese, and the second online document is an English version document having a same meaning as the text content of the first online document.

Step 1403: In response to an online document opening operation of the user 1, the terminal 1 displays the first online document on a screen of the terminal 1.

Step 1404: The terminal 1 sends a data sharing instruction to the media server.

Step 1405: The media server sends a notification message to the terminal 2 and the terminal 3.

The notification message is used to prompt the user to open an online document.

Step 1406: In response to an online document opening operation of the user 2, the terminal 2 displays the first online document on a screen of the terminal 2.

Step 1407: In response to an online document opening operation of the user 3, the terminal 3 displays the second online document on a screen of the terminal 3.

Step 1408a: The terminal 1 sends first display location information to the media server, where the first display location information represents a page number and/or a paragraph, in the first online document, of a text displayed on the screen of the terminal 1.

Step 1408b: The terminal 1 sends collaboration information to the media server, where the collaboration information indicates a location and/or operation content of an operation triggered by the user 1 on the screen of the terminal 1.

It should be noted that step 1408a and step 1408b may be performed in one step, or step 1408a and step 1408b are respectively performed in two steps. A sequence of performing step 1408a and step 1408b is not limited.

Step 1409a: The media server sends the first display location information to the terminal 2.

Step 1409b: The media server sends the collaboration information of the terminal 1 to the terminal 2.

It should be noted that step 1409a and step 1409b may be performed in one step, or step 1409a and step 1409b are respectively performed in two steps. A sequence of performing step 1409a and step 1409b is not limited.

Step 1410a: The media server sends document positioning information to the terminal 3.

The document positioning information is determined by the media server based on the first display location information sent by the terminal 1. For a specific determining manner, refer to the foregoing descriptions.

Step 1410b: The media server sends the collaboration information of the terminal 1 to the terminal 3.

It should be noted that step 1410a and step 1410b may be performed in one step, or step 1410a and step 1410b are respectively performed in two steps. A sequence of performing step 1410a and step 1410b is not limited.

Step 1411: The terminal 2 displays, on the screen, the text content of the first online document that is determined based on the first display location information and the collaboration information of the terminal 1 in a superimposed manner.

Step 1412: The terminal 3 displays, on the screen, text content of the second online document that is determined based on the document positioning information and the collaboration information of the terminal 1 in a superimposed manner.

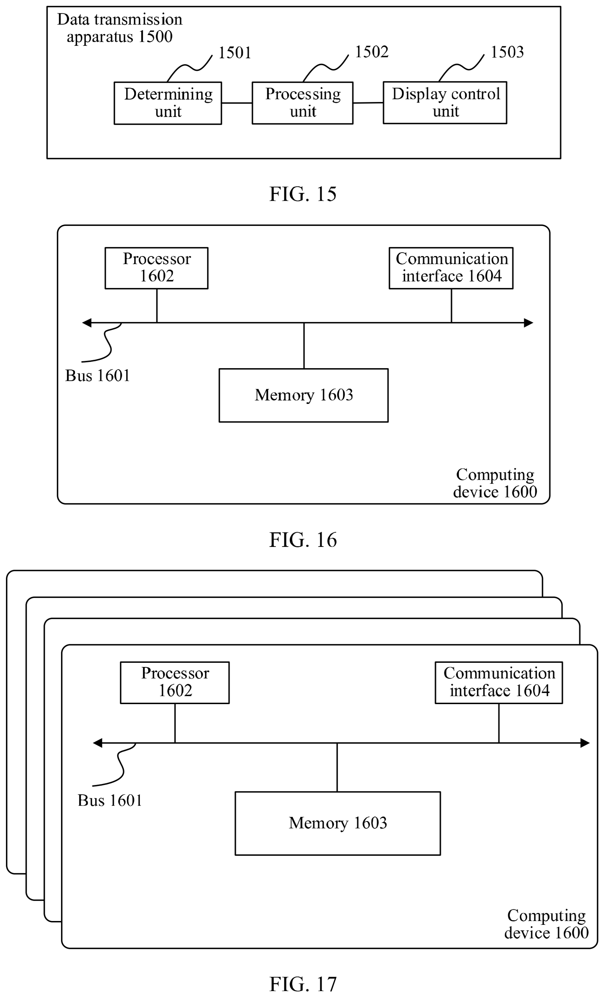

With reference to the foregoing method embodiments, an embodiment of this application further provides a data transmission apparatus. In some embodiments, as shown in FIG. 15, the data transmission apparatus 1500 may include a determining unit 1501, a processing unit 1502, and a display control unit 1503. The data transmission apparatus 1500 may be configured to implement functions of the foregoing method embodiments, and therefore may implement beneficial effects of the foregoing method embodiments.

The determining unit 1501 is configured to determine first media data displayed on a screen of a first terminal, where the first media data includes text content in a first language. The processing unit 1502 is configured to: if a second terminal selects to use a second language, generate second media data corresponding to the first media data, where the second media data includes text content in the second language, and the first terminal and the second terminal access a same meeting. The display control unit 1503 is configured to control screen display content of the second terminal based on the second media data.

In a possible implementation, the first media data is a first video frame in a target video obtained by recording the screen of the first terminal, and the second media data is a second video frame.

In a possible implementation, the determining unit 1501 is configured to:
receive the target video sent by the first terminal, where the target video includes a plurality of video frames; and
determine the first video frame from the target video, where the first video frame is a video frame that is in the target video and whose display content is changed compared with that of a previous frame.

In a possible implementation, the processing unit 1502 is configured to:
translate text content in the first video frame, to obtain the second video frame corresponding to the first video frame.

In a possible implementation, the first media data is text data of a first online document, the second media data is text data of a second online document, and the text data of the first online document and the text data of the second online document represent a same meaning.

In a possible implementation, the processing unit 1502 is configured to:
determine the text data of the second online document based on address information of the second online document and document positioning information, where the document positioning information is determined based on the text data of the first online document currently displayed on the screen of the first terminal.

In a possible implementation, the display control unit 1503 is further configured to:
send the document positioning information to the second terminal, where the document positioning information is used to determine the text data of the second online document, and the display text is a text displayed on a screen of the second terminal.

In a possible implementation, the document positioning information is first display location information of the first online document, where the first display location information represents a page number and/or a paragraph, in the first online document, of a text displayed on the screen of the first terminal.

In a possible implementation, the document positioning information is second display location information of the second online document, where the second display location information represents a page number and/or a paragraph, in the second online document, of a text displayed on the screen of the second terminal, the second display location information is determined based on the first display location information of the first online document, and the first display location information represents a page number and/or a paragraph, in the first online document, of a text displayed on the screen of the first terminal.

In a possible implementation, the display control unit 1503 is configured to:
control the screen display content of the second terminal based on the second media data and collaboration information sent by the first terminal, where the collaboration information indicates a location and/or operation content of an operation triggered by a user on the screen of the first terminal.

The determining unit 1501, the processing unit 1502, and the display control unit 1503 may all be implemented by using software, or may be implemented by using hardware. For example, the following uses the processing unit 1502 as an example to describe an implementation of the processing unit 1502. Similarly, for implementations of the determining unit 1501 and the display control unit 1503, refer to the implementation of the processing unit 1502.

A module is used as an example of a software functional unit. The processing unit 1502 may include code running on a computing instance. The computing instance may include at least one of a physical host (a computing device), a virtual machine, and a container. Further, there may be one or more computing instances. For example, the processing unit 1502 may include code running on a plurality of hosts/virtual machines/containers. It should be noted that the plurality of hosts/virtual machines/containers configured to run the code may be distributed in a same region, or may be distributed in different regions. Further, the plurality of hosts/virtual machines/containers configured to run the code may be distributed in a same AZ, or may be distributed in different AZs. Each AZ includes one data center or a plurality of data centers with similar geographical locations. Generally, one region may include a plurality of AZs.

Similarly, the plurality of hosts/virtual machines/containers configured to run the code may be distributed in a same VPC, or may be distributed in a plurality of VPCs. Generally, one VPC is disposed in one region. For cross-region communication between two VPCs in a same region and between VPCs in different regions, a communication gateway needs to be disposed in each VPC, and interconnection between the VPCs is implemented through the communication gateway.

The module is used as an example of a hardware functional unit. The processing unit 1502 may include at least one computing device, for example, a server. Alternatively, the processing unit 1502 may be a device implemented by using an application-specific integrated circuit (application-specific integrated circuit, ASIC), a programmable logic device (programmable logic device, PLD), or the like. The PLD may be implemented by using a complex programmable logical device (complex programmable logical device, CPLD), a field-programmable gate array (field-programmable gate array, FPGA), a generic array logic (generic array logic, GAL), or any combination thereof.

A plurality of computing devices included in the processing unit 1502 may be distributed in a same region, or may be distributed in different regions. A plurality of computing devices included in a module A may be distributed in a same AZ, or may be distributed in different AZs. Similarly, the plurality of computing devices included in the module A may be distributed in a same VPC, or may be distributed in a plurality of VPCs. The plurality of computing devices may be any combination of computing devices such as the server, the ASIC, the PLD, the CPLD, the FPGA, and the GAL.

It should be noted that, in another embodiment, the processing unit 1502 may be configured to perform any step in a data transmission method, the determining unit 1501 may be configured to perform any step in the data transmission method, and the display control unit 1503 may be configured to perform any step in the data transmission method. Steps that the determining unit 1501, the processing unit 1502, and the display control unit 1503 are responsible for implementing may be specified as required. The determining unit 1501, the processing unit 1502, and the display control unit 1503 respectively implement different steps in the data transmission method, to implement all functions of the data transmission apparatus.

This application further provides a computing device 1600. As shown in FIG. 16, the computing device 1600 may be configured to implement functions of the media service apparatus in the foregoing embodiments, and includes a bus 1601, a processor 1602, a memory 1603, and a communication interface 1604. The processor 1602, the memory 1603, and the communication interface 1604 communicate with each other through the bus 1601. The computing device 1600 may be a server or a terminal device. It should be understood that quantities of processors and memories in the computing device 1600 are not limited in this application.

The bus 1601 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used to represent the bus in FIG. 16, but this does not mean that there is only one bus or only one type of bus. The bus 1601 may include a path for transmitting information between components (for example, the memory 1603, the processor 1602, and the communication interface 1604) of the computing device 1600.

The processor 1602 may include any one or more of processors such as a CPU, a graphics processing unit (graphics processing unit, GPU), a microprocessor (microprocessor, MP), or a digital signal processor (digital signal processor, DSP).

The memory 1603 may include a volatile memory (volatile memory), for example, a random access memory (random access memory, RAM). The processor 1602 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 1603 stores executable program code, and the processor 1602 executes the executable program code to separately implement functions of the determining unit 1501, the processing unit 1502, and the display control unit 1503, to implement a data transmission method. In other words, the memory 1603 stores instructions for performing the data transmission method.

The communication interface 1604 implements communication between the computing device 1600 and another device or a communication network by using a transceiver module, for example, but not limited to a network interface card or a transceiver.

An embodiment of this application further provides a computing device cluster. The computing device cluster includes at least one computing device. The at least one computing device in the computing device cluster is configured to implement a function of the computing apparatus in the foregoing embodiment. The computing device may be a server, for example, a central server, an edge server, or a local server in a local data center. In some embodiments, the computing device may alternatively be a terminal device, for example, a desktop computer, a notebook computer, or a smartphone.

As shown in FIG. 17, the computing device cluster includes at least one computing device 1600. A memory 1603 in one or more computing devices 1600 in the computing device cluster may store same instructions for performing a data transmission method.

Alternatively, in some possible implementations, the memory 1603 in the one or more computing devices 1600 in the computing device cluster may separately store some instructions for performing a data transmission method. In other words, a combination of the one or more computing devices 1600 may jointly execute the instructions for performing the data transmission method.

It should be noted that memories 1603 in different computing devices 1600 in the computing device cluster may store different instructions respectively for performing some functions of the computing apparatus. In other words, the instructions stored in the memories 1603 in the different computing devices 1600 may implement functions of one or more of the determining unit 1501, the processing unit 1502, and the display control unit 1503.

In some possible implementations, the one or more computing devices in the computing device cluster may be connected through a network. The network may be a wide area network, a local area network, or the like.

An embodiment of this application further provides a computer program product including instructions. The computer program product may be software or a program product that includes the instructions and that can run on a computing device or can be stored in any usable medium. When the computer program product runs on at least one computing device, the at least one computing device is enabled to perform an application deployment method.

An embodiment of this application further provides a computer-readable storage medium. The computer-readable storage medium may be any usable medium that can be stored by a computing device, or a data storage device, for example, a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and the instructions instruct the computing device to perform an application deployment method.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a magnetic disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more procedures in the flowcharts and/or in one or more blocks in the block diagrams.

These computer program instructions may be stored in a computer-readable memory that can indicate a computer or any other programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to this application without departing from the spirit and scope of this application. In this way, this application is intended to cover these modifications and variations of this application provided that they fall within the scope of the claims of this application and their equivalent technologies.

## Claims

1. A data transmission method, wherein the method is applied to a media service apparatus, and the method comprises:
determining first media data displayed on a screen of a first terminal, wherein the first media data comprises text content in a first language;
if a second terminal selects to use a second language, generating second media data corresponding to the first media data, wherein the second media data comprises text content in the second language, and the first terminal and the second terminal access a same meeting; and
controlling screen display content of the second terminal based on the second media data.

2. The method according to claim 1, wherein the first media data is a first video frame in a target video obtained by recording the screen of the first terminal, and the second media data is a second video frame.

3. The method according to claim 2, wherein the determining the first media data displayed on the screen of the first terminal comprises:
receiving the target video sent by the first terminal, wherein the target video comprises a plurality of video frames; and
determining the first video frame from the target video, wherein the first video frame is a video frame that is in the target video and whose display content is changed compared with that of a previous frame.

4. The method according to claim 2 or 3, wherein the generating the second media data corresponding to the first media data comprises:
translating text content in the first video frame, to generate the second video frame corresponding to the first video frame.

5. The method according to claim 1, wherein the first media data is text data of a first online document, the second media data is text data of a second online document, and the text data of the first online document and the text data of the second online document represent a same meaning.

6. The method according to claim 5, wherein the generating the second media data corresponding to the first media data comprises:
determining the text data of the second online document based on address information of the second online document and document positioning information, wherein the document positioning information is determined based on the text data of the first online document currently displayed on the screen of the first terminal.

7. The method according to any one of claims 2 to 6, wherein the controlling the screen display content of the second terminal based on the second media data comprises:
controlling the screen display content of the second terminal based on the second media data and collaboration information sent by the first terminal, wherein the collaboration information indicates a location and/or operation content of an operation triggered by a user on the screen of the first terminal.

8. A data transmission apparatus, wherein the apparatus comprises:
a determining unit, configured to determine first media data displayed on a screen of a first terminal, wherein the first media data comprises text content in a first language;
a processing unit, configured to: if a second terminal selects to use a second language, generate second media data corresponding to the first media data, wherein the second media data comprises text content in the second language, and the first terminal and the second terminal access a same meeting; and
a display control unit, configured to control screen display content of the second terminal based on the second media data.

9. The apparatus according to claim 8, wherein the first media data is a first video frame in a target video obtained by recording the screen of the first terminal, and the second media data is a second video frame.

10. The apparatus according to claim 9, wherein the determining unit is configured to:
receive the target video sent by the first terminal, wherein the target video comprises a plurality of video frames; and
determine the first video frame from the target video, wherein the first video frame is a video frame that is in the target video and whose display content is changed compared with that of a previous frame.

11. The apparatus according to claim 9 or 10, wherein the processing unit is configured to:
translate text content in the first video frame, to generate the second video frame corresponding to the first video frame.

12. The apparatus according to claim 8, wherein the first media data is text data of a first online document, the second media data is text data of a second online document, and the text data of the first online document and the text data of the second online document represent a same meaning.

13. The apparatus according to claim 12, wherein the processing unit is configured to:
determine the text data of the second online document based on address information of the second online document and document positioning information, wherein the document positioning information is determined based on the text data of the first online document currently displayed on the screen of the first terminal.

14. The apparatus according to any one of claims 8 to 13, wherein the display control unit is configured to:
control the screen display content of the second terminal based on the second media data and collaboration information sent by the first terminal, wherein the collaboration information indicates a location and/or operation content of an operation triggered by a user on the screen of the first terminal.

15. A computing device cluster, comprising at least one computing device, wherein each computing device comprises a processor and a memory; and
a processor of the at least one computing device is configured to execute instructions stored in a memory of the at least one computing device, to enable the computing device cluster to perform the method according to any one of claims 1 to 7.

16. A computer-readable storage medium, wherein the storage medium stores a computer program or instructions, and when the computer program or the instructions are executed by a communication apparatus, the method according to any one of claims 1 to 7 is implemented.

17. A computer program product, wherein when the computer program product runs on a computer, the computer is enabled to perform the method according to any one of claims 1 to 7.
